Europäisches Patentamt

European Patent Office

Office européen des brevets

(11) Publication number: **0 219 902**
A1

## (12) EUROPEAN PATENT APPLICATION

(21) Application number: **86201719.1**

(22) Date of filing: **03.10.86**

(51) Int. Cl.⁴: **F 16 K 1/226**
**F 16 K 1/42, F 16 B 3/00**

(30) Priority: **10.10.85 NL 8502773**

(43) Date of publication of application:
**29.04.87 Bulletin 87/18**

(84) Designated Contracting States:
**AT BE CH DE ES FR GB GR IT LI LU NL SE**

(71) Applicant: **Huisman, Klaas**
**Altenaweg 2**
**NL-5126 PS Gilze(NL)**

(72) Inventor: **Huisman, Klaas**
**Altenaweg 2**
**NL-5126 PS Gilze(NL)**

(74) Representative: **van der Beek, George Frans, Ir. et al,**
**Nederlandsch Octrooibureau P.O. Box 29720**
**NL-2502 LS The Hague(NL)**

(54) Process for the fixing of a metal seat ring in a valve housing.

(57) Process for the fixing of an annular metal seat ring (7) in the housing (1) of a valve, in particular a butterfly valve, whereby cavity formed by the recesses present in the housing (1) and in the seat ring (7) is filled by injection with a vulcanizable elastomeric material (8), and the housing (1) with the seat ring (7) fitted therein is heated to achieve vulcanization of injected elastomer.

fig-3

EP 0 219 902 A1

NO 33448

Process for the fixing of a metal seat ring in a valve housing.

The invention relates to a process for the fixing of an annular metal seat in the housing of a valve, in particular a butterfly valve, where the metal seat ring is connected to the housing by means of a packing or the like.

Such a process is generally known in practice and in the literature, see for example the embodiment according to Fig. 1 of EP-B 0,040,725. This is a stainless steel seat ring in a cast iron valve housing. In this known process the seat ring is screwed in. Forced fit connections or bolted connections are also sometimes used.

These are often expensive constructions, in which the seal between seat ring and housing is very mediocre, despite the packing.

The object of the invention is to avoid these disadvantages with a process which is characterized in that the cavity formed by the recesses present in the housing and in the seat ring is filled by injection with a vulcanizable elastomeric material, and in that the housing with the seat ring fitted therein is heated to achieve vulcanization of injected elastomer.

In this way the metal seat ring is held firmly anchored in the valve housing by means Of the vulcanized ring of elastomeric material adhering to the housing and the seat ring. This ring works, as it were, as a keyed connection. It is preferable before the injection for the wall faces of the recesses present in the housing and in the seat ring to be given a surface treatment, such as steel grit blasting, following which the wall faces are provided with a vulcanizable adhesive.

This produces a very good connection and seal between valve housing and seat ring.

The seal between the valve housing and the seat ring is achieved entirely by the same bonded elastomeric ring. The invention will be explained in greater detail with reference to the drawing, in which:

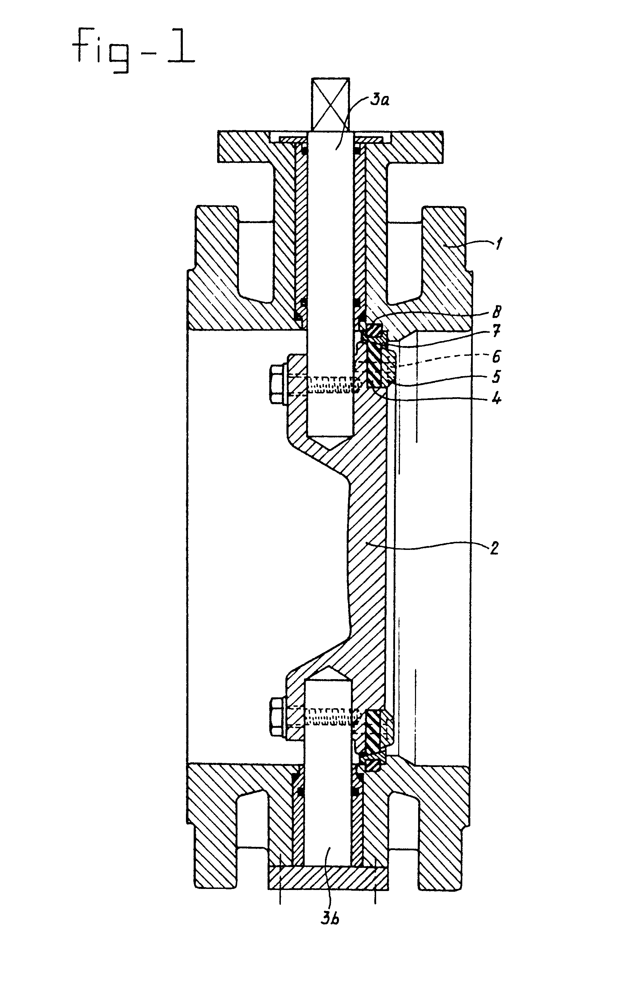

Fig. 1 is a longitudinal section through a butterfly valve;

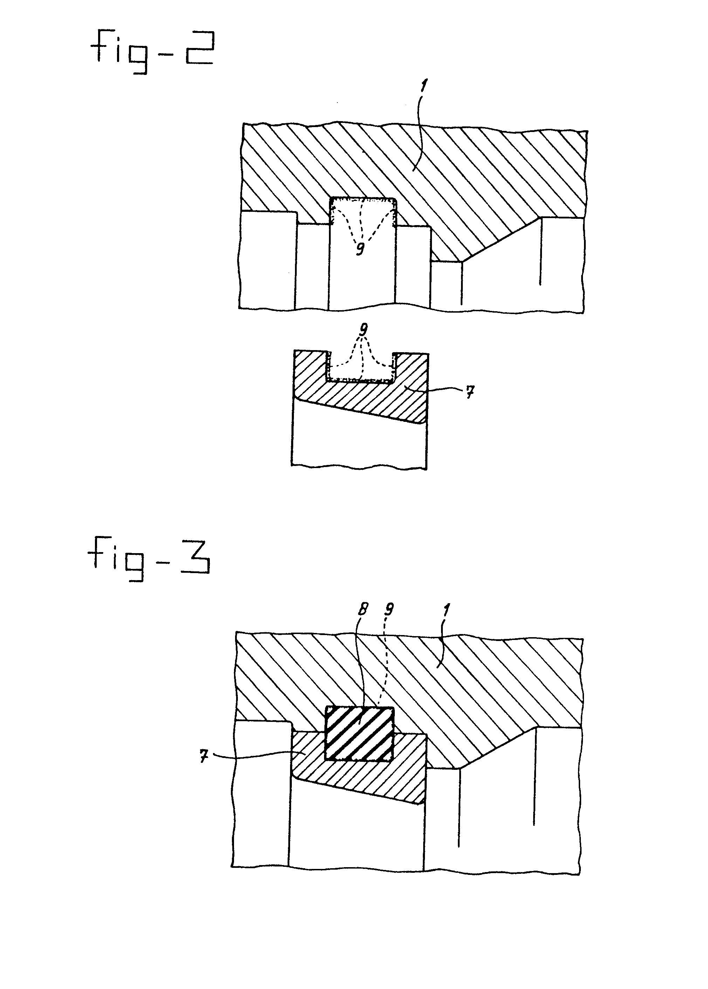

Figs. 2 and 3 show details of Fig. 1 on a larger scale, or during the carrying out of the process and after the carrying out of the process.

The housing - which is known per se - of a butterfly valve is indicated by 1 and is made, for example, of cast iron.

The passage in this housing 1 can be shut off by a disc-shaped valve body 2 which is rotatable on pins 3a and 3b relative to the housing 1. The valve body 2 is provided along the periphery with a flat sealing disc 4, for example of elastomeric material. This sealing disc 4 is retained by a clamping ring 5 and screws 6.

In the valve housing 1 there is a seat ring 7, which is preferably made of stainless steel and is sealed by means of a packing ring 8 in the valve housing 1.

In conventional butterfly valves or in valves with a valve body which can be moved in a straight line, such a seat ring is generally fixed in the valve housing by screw thread or force fitting. Problems can arise here with the seal, since the medium for closing the valve can leak out behind the seat ring.

According to the invention, the walls of the recess in the housing 1 and in the seat ring 7, said recesses together forming an annular cavity and being intended for accommodation of the packing ring 8, are made smooth, for example through blasting with steel grit. These surfaces are subsequently smeared with an adhesive 9 which is known per se, on a rubber base, which can be vulcanized. After positioning of the seat ring 7 in in the valve housing 1, the annular cavity, which is rectangular in the drawing, is filled by injection with a liquid elastomer.

This injection takes place through a channel (not shown) in the valve housing 1. After the injection, the injection apparatus is removed, and the channel is shut off by means of a plug. This technique is known per se.

The valve housing 1, with therein the seat ring 7 and the injected elastomeric material 8, is then heated in an oven, preferably under pressure, to a desired temperature to produce vulcanization of the elastomeric material 8 and of the adhesive 9. The elastomer 8 and the adhesive 9 are thus hereby vulcanized, which produces a very good metal-rubber connection. The seal between valve housing 1 and seat ring 7 is complete, while the rubber ring 8 ensures that the metal seat ring 7 is fixed definitively in the longitudinal direction of the valve housing 1. This rubber ring 8 not only forms part of the seal, but works also as a keyed connection between housing 1 and seat ring 7, so that the seat ring 7 cannot slide axially relative to the housing 1.

Of course, the process according to the invention can also be used where a rubber sealing disc 4 is not used, but where the edges of the valve body 2 are made of metal. The metal seat ring 7 would then have to be sufficiently thin at the point of contact with the valve member 2 to give flexibility.

The injected elastomeric ring 8 would then have to be adapted concerning its cross section.

CLAIMS

1. Process for the fixing of an annular metal seat ring in the housing of a valve, in particular a butterfly valve, where the metal seat ring is connected to the housing by means of a packing or the like, characterized in that the cavity formed by the recesses present in the housing and in the seat ring is filled by injection with a vulcanizable elastomeric material, and in that the housing with the seat ring fitted therein is heated to achieve vulcanization of injected elastomer.

2. Process according to Claim 1, characterized in that the elastomeric material in the annular cavity is under pressure during the vulcanization.

3. Process according to Claim 1 or 2, characterized in that, before the injection, the wall faces of the recesses in the housing and the seat ring are subjected to a surface treatment such as steel grit blasting.

4. Process according to Claim 3, characterized in that these wall faces are subsequently provided with a vulcanizable adhesive, before the injection.

fig-1

0219902

## fig-2

## fig-3

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| Y | US-A-1 822 754 (F.E.SMITH) <br> * Claim 1 * | 1 | F 16 K 1/226 <br> F 16 K 1/42 <br> F 16 B 3/00 |
| Y | FR-A-1 411 896 (ARFA RÖHRENWERKE AG) <br> * Abstract, point 6 * | 1 | |
| A | DE-A-2 004 451 (C.A.NORGREN CO) | | |
| A | FR-A-2 446 407 (IRRIFRANCE) | | |
| A | FR-A-2 329 884 (KLOCKNER-HUMBOLDT-DEUTZ AG) | | |
| A | FR-A-2 072 357 (J.C.GARCIA) | | |

TECHNICAL FIELDS SEARCHED (Int Cl 4)

F 16 K 1/00
F 16 K 27/00
F 16 B
F 16 L

The present search report has been drawn up for all claims

| Place of search | Date of completion of the search | Examiner |
|---|---|---|
| THE HAGUE | 19-01-1987 | DE SMET F.P. |